# EUROPEAN PATENT APPLICATION

(11) **EP 3 839 729 A1**
(43) Date of publication of application: **23.06.2021**
(21) Application number: 18934020.1
(22) Date of filing: 18.09.2018
(51) Int. Cl.: G06F 9/44

(54) **PROGRAM FILE WRITING AND RUNNING PROCESSING METHOD, DEVICE AND SYSTEM**

(71) Applicant: Siemens Aktiengesellschaft, 80333 München (DE); Wang, Tongzhou, Beijing 100176 (CN); Zhang, Meng, Beijing 100101 (CN); Wang, Yan, Beijing 100029 (CN); Zhang, Chuanyu, Beijing 100028 (CN); Li, Dong, Beijing 100025 (CN)
(72) Inventor: WANG, Tongzhou, Beijing 100176 (CN); ZHANG, Meng, Beijing 100101 (CN); WANG, Yan, Beijing 100029 (CN); ZHANG, Chuanyu, Beijing 100028 (CN); LI, Dong, Beijing 100025 (CN)
(74) Representative: Isarpatent
(86) International application number: PCT/CN2018/106190
(87) International publication number: WO 2020/056585

(57) **Abstract**

Provided are a program file writing and running processing method, device and system. The system comprises a program file writing processing device, a cloud end processing device and a program file running processing device. The program file writing processing device converts a program file written in a specific format specified by a provider into a program node description model that can be described by a universal description language and is used to represent a reference relationship between nodes in the program file, and then stores same in the cloud end processing device for a program runner to download and run; moreover, during downloading and running by the program runner, the program file running processing device converts same into a program file executable by the program runner based on the reference relationship between nodes in the program node description model for execution by the program runner.

## Description

### Technical Field

The present disclosure relates generally to the field of automation systems, and more particularly, to a method and an apparatus for program file writing and running processing, and a system for program file processing.

### Background Art

Automation system providers (such as Siemens, ABB, and Schneider) usually provide a programming tool (e.g., a programming software STEP 7) together with a program runner (e.g., a programmable logic controller (PLC)) to their customers. Generally, a programming tool cannot be used with program runners from different providers. This means that although the program runners from different providers can communicate with each other via an open-source protocol, engineering personnel still need to configure different programming tools (Engineering Tool) in an engineering station to write program code for the program runners from different providers.

As a result, in the case of the prior art, to enable program code writing for various program runners (Runtime), it is required to configure different programming tools in an engineering station. However, some programming tools from different providers cannot be installed on the same computer, making it difficult to configure the engineering station.

Additionally, programs for different program runners are distributed in different programming tools in the engineering station, and different programming tools use file formats incompatible with each other. Therefore, when writing programs, engineering technical personnel are required to know global information (such as an overall structure and logic) of all the programs and write the programs on different programming tools. Furthermore, since the program code written by the engineering technical personnel is distributed in different programming tools, it is required to frequently switch different programming tools during program debugging, which causes many inconveniences to the work of the engineering technical personnel.

Moreover, in the prior art, for some reasons (e.g., performance, reliability, or deployment), the engineering technical personnel may want to migrate a program from one program runner to another, or replace it using a new program runner. If two program runners come from different providers, the program cannot be switched from one programming tool to another, and therefore the engineering technical personnel need to rewrite the program.

Additionally, in the prior art, once a programming tool is upgraded while a corresponding program runner is not, the version of the programming tool will be incompatible with that of the program runner.

In view of this, IEC releases a series of standards, such as IEC-61131-3 and IEC-61499, to standardize programming languages of different PLCs, and defines the TC6 XML standard as a universal file format for different program runner providers. Based on this, IEC expects that programming tools from all providers support all IEC61131 programming languages and use TC6 as a universal file interchange format.

However, although many program runner providers declare that they support IEC61131, there are still some differences between their implementations. This is because each provider has a proprietary technology in its own implementation, and they do not want the technology to be able to run on program runners from other providers . In order to press the program runner providers more for the standard programming language and file format, open-source communities and some companies provide open-source or free solutions (including engineering tools and runtime) that strictly follow the IEC standard. For example, Beremiz/CodeSys is an open-source/free solution for IEC61131; and 4DIAC is an open-source solution for IEC61499. More users (particularly cost-sensitive users) now employ these free tools to develop their control systems. Although these standard solutions can easily interchange programs, installation, deployment, and debugging are still heavy work for the engineering technical personnel.

Users of important application programs who have no faith in the open-source/free solutions usually use/write a special program converter to convert programs between different program runners. In such types of program conversion, usually, a program in a program runner from one provider is first parsed and matched to a mode, and then the mode is encoded into a program format for another provider. This is an only feasible solution to cooperate with different program runner providers. However, the program after the above conversion is not identical with the original one, and therefore the engineering technical personnel need to make great effort to modify the code to keep the program identical with the original one.

### Summary of the Invention

In view of the above, the present disclosure provides a program file processing method. By using the program file processing method, a program file written in a particular format specified by a provider is converted to a program node description model that can be described using a generic description language to represent a reference relationship between nodes in the program file, then the program node description model is stored in a cloud server for downloading and running by a program runner, and during the downloading and running by the program runner, the program node description model is converted to a program file executable by the program runner based on the reference relationship between the nodes in the program node description model. In this way, it is not necessary to configure various programming tools in an engineering station to write program code for program runners from different providers, thereby making the configuration of the engineering station simple. Furthermore, using the method can also make program file migration more simple and convenient.

According to one aspect of the present disclosure, a method for program file writing is provided, the method comprising: determining a programming tool type of a program file based on a format of the program file; selecting a program description abstraction manner matching the determined programming tool type from at least one program description abstraction manner, each of the at least one program description abstraction manner corresponding to one program file format and being capable of abstracting a program node description model from a program file of a corresponding format; and using the selected program description abstraction manner to abstract the program node description model from the program file, wherein the program node description model is used to describe a reference relationship between nodes in the program file.

Optionally, in one example of the above aspect, when the method is performed on a client, the method may further comprise: sending the program node description model to a cloud processing apparatus for distribution by the cloud processing apparatus to at least one program runner.

Optionally, in one example of the above aspect, the program node description model is described using a description language applicable to a capability of describing the reference relationship between the nodes in the program file.

Optionally, in one example of the above aspect, the description language comprises one of the following: a description language in an OLE unified architecture (Object Linking and Embedding (OLE) for Process Control-Unified Architecture, OPC-UA) address space format; a description language in a JavaScript Object Notation (JSON) format; and a description language in an eXtensible Markup Language (XML) format.

Optionally, in one example of the above aspect, the program file is a program file of an automatic control system, and the program runner is a programmable logic controller.

According to another aspect of the present disclosure, a method for program file running processing is provided, the method comprising: obtaining at least one program node description model from at least one cloud server, the program node description model being used to describe a reference relationship between nodes in a program file; and converting, by using a program file conversion unit matching a program runner that runs the program file, the obtained at least one program node description model to a program file executable by the program runner based on the reference relationship between the nodes in the obtained at least one program node description model.

Optionally, in one example of the above aspect, the method further comprises: loading the converted program file into the program runner.

Optionally, in one example of the above aspect, the program node description model is described using a description language applicable to a capability of describing the reference relationship between the nodes in the program file.

Optionally, in one example of the above aspect, the description language comprises one of the following description languages: a description language in an OPC-UA address space format; a description language in a JSON format; and a description language in an XML format.

Optionally, in one example of the above aspect, the program file is a program file for an industrial control system, and the program runner is a programmable logic controller.

According to another aspect of the present disclosure, a program file writing processing apparatus is provided, the apparatus comprising: a programming tool type determining unit, configured to determine a programming tool type of a program file based on a format of the program file; at least one program description abstraction unit, each program description abstraction unit corresponding to one program file format, configured to abstract a program node description model from a program file of a corresponding format, wherein the program node description model is used to describe a reference relationship between nodes in the program file; and a selection unit, configured to select a program description abstraction unit matching the determined programming tool type from the at least one program description abstraction unit, wherein the selected program description abstraction unit is used to abstract the program node description model from the program file.

Optionally, in one example of the above aspect, when the program file writing processing apparatus is located on a client, the program file writing processing apparatus may further comprise: a sending unit, configured to send the program node description model to a cloud processing apparatus for distribution by the cloud processing apparatus to at least one program runner.

Optionally, in one example of the above aspect, the program description abstraction unit is an open-type cross-language interface.

According to another aspect of the present disclosure, a program file running processing apparatus is provided, the apparatus comprising: a description model obtaining unit, configured to obtain at least one program node description model from at least one cloud processing apparatus, the program node description model being used to describe a reference relationship between nodes in a program file; and at least one program file conversion unit, matching a program runner that runs a program file, configured to convert the obtained at least one program node description model to a program file executable by the program runner based on the reference relationship between the nodes in the obtained at least one program node description model.

Optionally, in one example of the above aspect, the program file running processing apparatus may further comprise: a loading unit, configured to load the converted program file into the program runner.

Optionally, in one example of the above aspect, the program file conversion unit is an open-type cross-language interface based on C++.

According to another aspect of the present disclosure, a system for program file processing is provided, the system comprising: at least one program file writing processing apparatus as described above; at least one program file running processing apparatus as described above; and at least one cloud processing apparatus, configured to store a program node information description model sent by the at least one program file writing processing apparatus, and/or distribute the stored program node information description model to the at least one program file running processing apparatus in response to a request of the at least one program file running processing apparatus.

Optionally, in one example of the above aspect, the at least one cloud processing apparatus may be further configured to: store real-time running data and historical running data obtained after the at least one program runner executes the loaded program file.

Optionally, in one example of the above aspect, the system may further comprise: at least one program file monitoring/debugging apparatus, configured to receive the real-time running data and historical running data from the at least one cloud processing apparatus, and perform monitoring and/or debugging based on the received real-time running data and historical running data.

Optionally, in one example of the above aspect, the program file writing processing apparatus, the program file running processing apparatus, and the program file monitoring/debugging apparatus are located in at least one local terminal device.

Optionally, in one example of the above aspect, the program file writing processing apparatus, the program file running processing apparatus, and the program file monitoring/debugging apparatus are located on a first client, a second client, and a third client, respectively, and the first client, the second client, and the third client are clients based on a webpage.

According to another aspect of the present disclosure, a computing device is provided, the computing device comprising: at least one processor; and a memory coupled to the at least one processor, configured to store instructions that, when executed by the at least one processor, cause the processor to perform the method for program file writing processing as described above or perform the method for program running processing as described above.

According to another aspect of the present disclosure, a non-transitory machine-readable storage medium is provided, storing executable instructions that, when executed, cause the machine to perform the method for program file writing processing as described above or perform the method for program running processing as described above.

According to another aspect of the present disclosure, a computer program is provided, comprising computer executable instructions that, when executed, cause at least one processor to perform the method for program file writing processing as described above or perform the method for program running processing as described above.

According to another aspect of the present disclosure, a computer program product is provided, tangibly stored on a computer-readable medium and comprising computer executable instructions that, when executed, cause at least one processor to perform the method for program file writing processing as described above or perform the method for program running processing as described above.

By using the program file writing processing method and the program file running processing method in the present disclosure, a program file written in a particular format specified by a provider is converted to a program node description model that can be described using a generic description language to represent a reference relationship between nodes in the program file, then the program node description model is stored in a cloud server for downloading and running by a program runner, and during the downloading and running by the program runner, the program node description model is converted to a program file executable by the program runner based on the reference relationship between the nodes in the program node description model. In this way, it is not necessary to configure various programming tools in an engineering station to write program code for program runners from different providers, thereby making the configuration of the engineering station simple.

Furthermore, by using the program file writing processing method and the program file running processing method of the present disclosure, when program file migration is needed, it is only required to abstract a program node description model from a cloud server corresponding to the program file, and convert the program node description model to a corresponding executable file, which makes program file migration more simple and convenient.

### Brief Description of the Drawings

The essence and advantages of the present disclosure can be further understood with reference to the following drawings. In the drawings, similar components or features may have identical reference numerals.
Fig. 1 is a schematic block diagram of a system for program file processing according to an embodiment of the present disclosure;
Fig. 2 is a schematic block diagram of a program file writing processing apparatus according to an embodiment of the present disclosure;
Fig. 3 is a flowchart of a method for program file writing processing according to an embodiment of the present disclosure;
Fig. 4 is a schematic block diagram of a program file running processing apparatus according to an embodiment of the present disclosure;
Fig. 5 is a flowchart of a method for program file running processing according to an embodiment of the present disclosure;
Fig. 6 is a flowchart of a method for program file monitoring and debugging according to an embodiment of the present disclosure;
Fig. 7 is a schematic diagram of an operation process of a system for program file processing in an OPC-UA environment according to an embodiment of the present disclosure;
Fig. 8 is a block diagram of a computing device for program file writing processing according to the present disclosure;
Fig. 9 is a block diagram of a computing device for program file running processing according to the present disclosure; and
Fig. 10 is a block diagram of a computing device for program file storing processing according to the present disclosure.

### Reference numerals

10 program file processing system
20 at least one programmer
30 at least one program runner
110 at least one program writing processing apparatus
120 at least one cloud processing apparatus
130 at least one program file running processing apparatus
140 at least one program file monitoring/debugging apparatus
111 programming tool type determining unit
113 selection unit
115 at least one program description abstraction unit
117 sending unit
119 OPC-UA client
131 description model obtaining unit
133 program file conversion unit
135 loading unit
115-1 model.sys program description abstraction unit
115-2 CFC program description abstraction unit
115-N other types of program description abstraction units
50-1 DCRT program code
50-2 Forte program code
133-1 DCRT program file conversion unit
133-2 Forte program file conversion unit
60 data provider
70 kernel
80 view model
90 view
S300 program file writing processing process
S310 sending a written program file to a program file writing processing apparatus
S320 determining a programming tool type of the program file
S330 selecting a matching program description abstraction manner
S340 using the selected program description abstraction manner to abstract a program node description model
S350 sending the abstracted program node description model to a cloud processing apparatus
S500 program file running processing process
S510 a program runner sends a program file running request to a program file running processing apparatus
S520 the program file running processing apparatus sends a program file running request to at least one cloud processing apparatus
S530 the at least one cloud processing apparatus returns at least one program node description model to the program file running processing apparatus
S540 using a program file conversion unit matching the program runner to convert the obtained at least one program node description model to a program file executable by the program runner
S550 loading the converted program file into the program runner
S600 program file monitoring and debugging process
S610 a program runner feeds back real-time running data and historical running data to at least one cloud processing apparatus
S620 the at least one cloud processing apparatus stores the real-time running data and historical running data in association with a corresponding node in the program node description model
S630 the at least one cloud processing apparatus receives a program file running monitoring and debugging request from at least one program file monitoring/debugging apparatus
S640 the at least one cloud processing apparatus sends the corresponding real-time running data and historical running data to the at least one program file monitoring/debugging apparatus S650 the at least one program file monitoring/debugging apparatus performs monitoring and debugging based on the received real-time running data and historical running data
800 computing device
810 at least one processor
820 memory
900 computing device
910 at least one processor
920 memory
1000 computing device
1010 at least one processor
1020 memory

### Detailed Description of Embodiments

The subject matter described herein will now be discussed with reference to exemplary embodiments. It should be understood that the discussion of the embodiments is merely intended to enable a person skilled in the art to better understand and realize the subject matter described herein, but not to limit the protection scope, applicability or examples set forth in the claims. The functions and arrangement of the discussed elements may be changed without departing from the protection scope of the present disclosure. Various processes or components may be omitted, replaced, or added in various examples as required. For example, the described method may be performed in an order different from the one described, and the steps may be added, omitted, or combined. In addition, the features described in terms of some examples can also be combined in other examples.

As used herein, the term "comprise" and variants thereof represent an open term, which means "including but not limited to". The term "based on" represents "at least partially based on". The terms "an embodiment" and "the embodiment" represent "at least one embodiment". The term "another embodiment" represents "at least one other embodiment". The terms "first", "second", and the like may refer to different or the same objects. Other definitions, either explicit or implicit, may be included below. Unless expressly specified in the context, the definition of a term is consistent throughout the description.

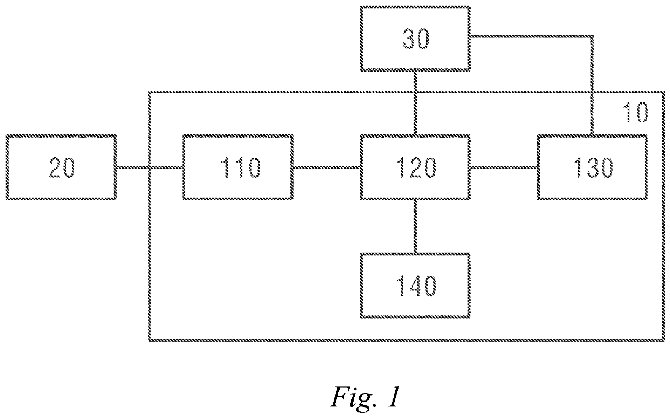

Fig. 1 is a schematic block diagram of a system for program file processing (hereinafter referred to as program file processing system 10) according to an embodiment of the present disclosure.

As shown in Fig. 1, the program file processing system 10 comprises at least one program file writing processing apparatus 110, at least one cloud processing apparatus 120, and at least one program file running processing apparatus 130. Moreover, optionally, the program file processing system 10 may further comprise at least one program file monitoring/debugging apparatus 140. Additionally, Fig. 1 further shows at least one programmer 20 and at least one program runner 30.

The at least one program file writing processing apparatus 110 obtains a written program file from the at least one programmer 20. The program file may be, for example, a program file written using programmers provided by various providers in program file formats specified by the providers. For example, the program file may be a program file of an automatic control system. Here, the program file formats specified by various providers are the same or different. In the present disclosure, the program file may be written using an online system or an offline system, preferably written using an offline system.

In the present disclosure, the program file obtained from the at least one programmer 20 may be actively submitted by the programmer to the at least one program file writing processing apparatus 110, or may be sent to the at least one program file writing processing apparatus 110 in response to a request from the at least one program file writing processing apparatus 110. Additionally, the program file may be obtained in real time, or may be obtained and stored in advance.

After obtaining the program file, the at least one program file writing processing apparatus 110 abstracts a program node description model from the program file, the program node description model being used to describe a reference relationship between nodes in the program file. The program node description model may be described using a description language applicable to a capability of describing the reference relationship between the nodes in the program file. For example, the description language may comprise one of the following description languages: a description language in an OPC-UA address space format; a description language in a JSON format; and a description language in an XML format.

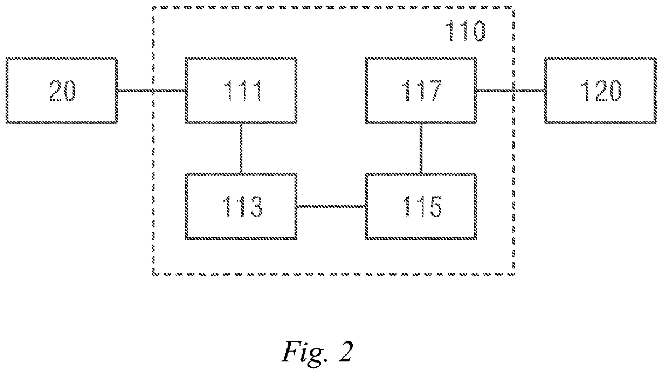

Fig. 2 is a schematic block diagram of a program file writing processing apparatus 110 according to an embodiment of the present disclosure. As shown in Fig. 2, the program file writing processing apparatus 110 comprises a programming tool type determining unit 111, a selection unit 113, and at least one program description abstraction unit 115.

After obtaining the program file from the programmer 20, the programming tool type determining unit 111 determines a programming tool type of the obtained program file based on a format of the program file. Here, the programming tool type of the program file may include, for example, a continuous function chart (CFC) programmer, a Model.sys programmer, a LabVIEW programmer, a C++ programmer, and a Python programmer. Then, the selection unit 113 selects a program description abstraction unit matching the determined programming tool type from the at least one program description abstraction unit 115. For example, in one example of the present disclosure, the selection unit 113 may select the program description abstraction unit matching the determined programming tool type according to a pre-configured correspondence table between programming tool types and program description abstraction units. In other examples of the present disclosure, the selection unit 113 may select the program description abstraction unit matching the determined programming tool type according to other suitable manners in the art. Then, the selected program description abstraction unit 115 is used to abstract a program node description model from the program file.

In the present disclosure, each program description abstraction unit corresponds to one program file format, and is configured to abstract a program node description model from a program file of a corresponding format. For example, the program description abstraction unit may be an open-type cross-language interface, for example, may be an interface of an OPC-UA client used for process control.

In the present disclosure, the program file writing processing apparatus 110 may be located in a cloud server, or may be located in a local terminal device. For example, the program file writing processing apparatus 110 may be a hardware module or a software module in a cloud server or a local terminal device. For example, the program file writing processing apparatus may be a software module located in a first client of the local terminal device. The first client may be a client based on a webpage, and a user may browse or visit the client using a browser, to perform a corresponding operation.

When the program file writing processing apparatus 110 is located in the local terminal device, the program file writing processing apparatus 110 further comprises a sending unit 117, configured to send the abstracted program node description model to the at least one cloud processing apparatus 120 for distribution by the cloud processing apparatus 120 to the at least one program runner. For example, the sending unit 117 may use a wired or wireless manner to send the abstracted program node description model to the cloud processing apparatus 120, for example, use HTTP/GET protocol to send the abstracted program node description model to the cloud processing apparatus 120. The cloud processing apparatus 120 may be any storage apparatus at the cloud, for example, any storage apparatus located in a cloud server. In the present disclosure, the program runner may be a PLC.

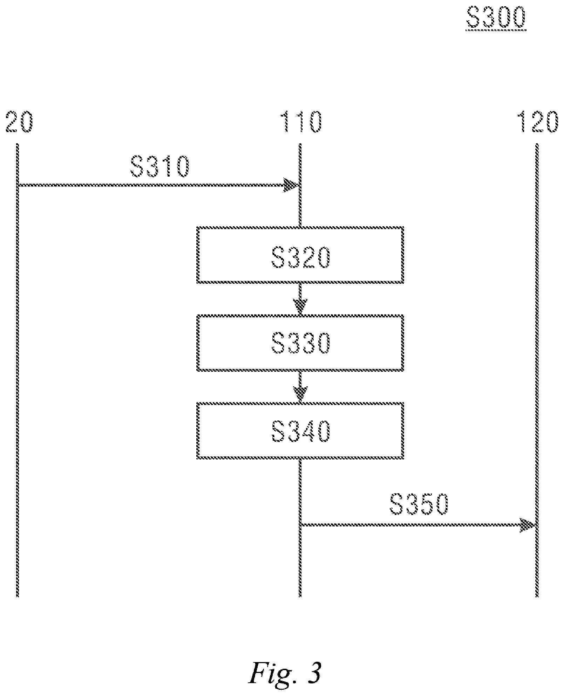

Fig. 3 is a flowchart of a method for program file writing processing according to an embodiment of the present disclosure. The method shown in Fig. 3 is performed by a program file writing processing apparatus located in a local terminal device.

As shown in Fig. 3, at S310, at least one program file writing processing apparatus 110 receives a program file from at least one programmer 20. Next, at S320, a programming tool type of the program file is determined based on a format of the received program file. The operation of S320 is the same as that of the programming tool type determining unit 111 described above with reference to Fig. 2.

Then, at S330, a program description abstraction manner matching the determined programming tool type is selected from at least one program description abstraction manner, each of the at least one program description abstraction manner corresponding to one program file format and being capable of abstracting a program node description model from a program file of a corresponding format. The operation of S330 is the same as that of the selection unit 113 described above with reference to Fig. 2.

After the matched program description mode is selected, at S340, the selected program description abstraction manner is used to abstract the program node description model from the program file. Here, the program description abstraction manner corresponds to the program description abstraction unit described in Fig. 2. Then, at S350, the abstracted program node description model is sent to at least one cloud processing apparatus 120. The cloud processing apparatus 120 may be any storage apparatus at the cloud, for example, any storage apparatus located in a cloud server. The operation of S350 is the same as that of the sending unit 117 described above with reference to Fig. 2.

In another example of the present disclosure, the program file writing processing apparatus 110 may be implemented in a cloud server. In this case, the program file writing processing apparatus 110 does not comprise the sending unit 117, and correspondingly, the method for program file writing processing does not comprise the operation of S350.

After the program node description model of the program file is obtained, the at least one cloud processing apparatus 120 in the at least one cloud server stores the obtained program node description model, and when the program file running processing apparatus 130 needs to perform program file running processing, sends the stored program node description model to the program file running processing apparatus 130 in response to a request of the program file running processing apparatus 130. Then, the program file running processing apparatus 130 performs conversion processing on the received program node description model, to obtain a program file executable by the program runner 30 through conversion based on the reference relationship between the nodes in the program node description model.

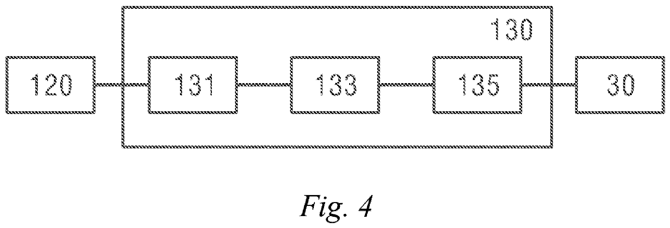

Fig. 4 is a schematic block diagram of a program file running processing apparatus 130 according to an embodiment of the present disclosure.

As shown in Fig. 4, the program file running processing apparatus 130 comprises a description model obtaining unit 131. The description model obtaining unit 131 is configured to obtain at least one program node description model from at least one cloud processing apparatus 120 (for example, in at least one cloud server). As described above, the program node description model is used to describe a reference relationship between nodes in a program file.

The program file running processing apparatus 130 further comprises a program file conversion unit 133 matching a program runner that runs a program file. The program file conversion unit 133 is configured to convert the obtained at least one program node description model to a program file executable by the program runner based on the reference relationship between the nodes in the obtained at least one program node description model. Herein, the "conversion" process means that the at least one program node description model is converted to corresponding executable program code based on a format required by a program file executable by a corresponding program runner, according to nodes included in the at least one program node description model and a reference relationship between the nodes. In one example of the present disclosure, the program file running processing apparatus 130 may comprise only one program file conversion unit 133 matching a program runner that runs a program file. In this case, the program file running processing apparatus 130 corresponds to only one program runner. In other examples of the present disclosure, the program file running processing apparatus 130 may comprise a plurality of program file conversion units 133, each program file conversion unit 133 corresponding to one program runner. In this case, the program file running processing apparatus 130 may correspond to a plurality of program runners. Correspondingly, the program file running processing apparatus 13 may comprise a program file conversion unit selector, configured to determine a program file conversion unit for program file conversion based on a program runner that runs a program file.

Optionally, the program file running processing apparatus 130 may further comprise a loading unit 135. The loading unit 135 is configured to load the converted program file to a processing kernel of the program runner, so that the processing kernel runs the program file, to obtain running data of the program file.

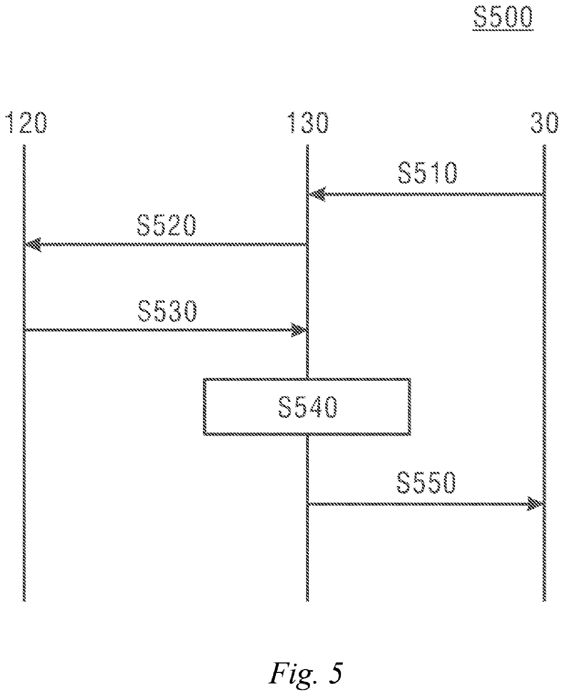

Fig. 5 is a flowchart of a method for program file running processing according to an embodiment of the present disclosure.

As shown in Fig. 5, first, at S510, when a program runner 30 needs to run a program file, the program runner 30 sends a program file obtaining request to a program file running processing apparatus 130. After receiving the program file obtaining request, at S520, the program file running processing apparatus 130 sends a program file description model obtaining request to at least one cloud processing apparatus 120. For example, in an OPC-UA environment, since OPC-UA address space is shared, and a plurality of cloud processing apparatuses (i.e., a plurality of cloud servers) maintain the same address space, the program file running processing apparatus 130 may send a program file description model obtaining request to any of the cloud processing apparatuses 120. After receiving the program file description model obtaining request, at S530, the at least one cloud processing apparatus 120 returns at least one program node description model to the program file running processing apparatus 130. The program node description model is used to describe a reference relationship between nodes in a program file.

Then, at S540, a program file conversion unit matching a program runner that runs the program file is used at the program file running processing apparatus 130 to convert the obtained at least one program node description model to a program file executable by the program runner based on the reference relationship between the nodes in the obtained at least one program node description model. Then, at S550, the converted executable program file is loaded into the program runner 30, for example, is loaded into the processing kernel of the program runner 30, for execution by the program runner 30, to generate program running data.

Furthermore, the program file processing system 10 may further comprise at least one monitoring/debugging apparatus 140. The at least one monitoring/debugging apparatus 140 is configured to receive real-time running data and historical running data from at the least one cloud processing apparatus 120, and perform monitoring and/or debugging based on the received real-time running data and historical running data. Correspondingly, the at least one cloud processing apparatus 120 is further configured to: store real-time running data and historical running data obtained after the at least one program runner 30 executes the loaded program file.

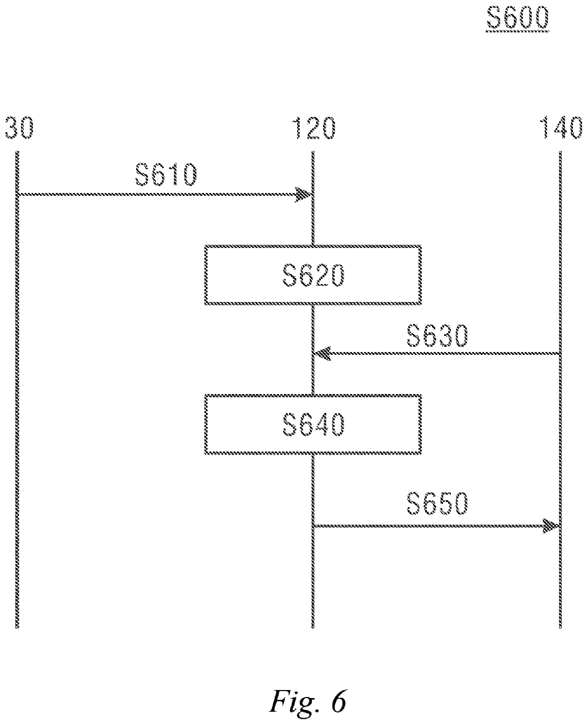

Fig. 6 is a flowchart of a method for program file monitoring and debugging according to an embodiment of the present disclosure.

As shown in Fig. 6, at S610, after a program runner 30 runs a program file, the obtained real-time running data and historical running data are sent to at least one cloud processing apparatus 120 in a wired or wireless manner. For example, the real-time running data may be sent to at least one cloud processing apparatus 120 via HTTP and stored in a real-time running database, and the historical running data may be sent to at least one cloud processing apparatus 120 via FTP and stored in a historical running database. It should be noted that the program runner 30 may alternatively use other suitable protocols to send the real-time running data and the historical running data to the at least one cloud processing apparatus 120. Then, at S620, the at least one cloud processing apparatus 120 stores the real-time running data and historical running data in association with a corresponding node in the program node description model.

After storing the running data as described above, if at S630, the at least one cloud processing apparatus receives a program file running monitoring/debugging request from at least one program file monitoring/debugging apparatus 140, the at least one cloud processing apparatus 120 will send, at S640, the corresponding real-time running data and historical running data to the at least one program file monitoring/debugging apparatus 140. Then, at S650, the at least one program file monitoring/debugging apparatus 140 performs monitoring and debugging based on the received real-time running data and historical running data.

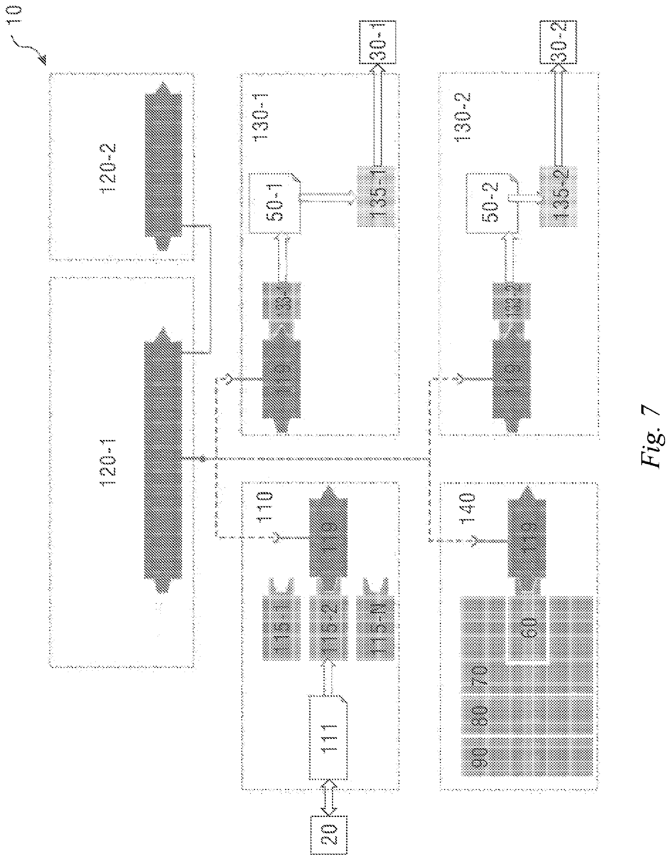

Fig. 7 is a schematic diagram of an operation process of a program file processing system 10 in an OPC-UA environment according to an embodiment of the present disclosure.

As shown in Fig. 7, the program file processing system 10 comprises a program file writing processing apparatus 110, cloud processing apparatuses 120-1 and 120-2, program file running processing apparatuses 130-1 and 130-2, and a program file monitoring/debugging apparatus 140. It should be noted here that the quantity of the program file writing processing apparatus, the cloud processing apparatus, the program file running processing apparatus, and the program file monitoring/debugging apparatus which are shown in Fig. 7 is merely an example, and in other examples, the quantity of the program file writing processing apparatus, the cloud processing apparatus, the program file running processing apparatus and the program file monitoring/debugging apparatus may be any other appropriate quantity.

With reference to Fig. 7, in a program writing phase, after the programmer 20 has written a program file, the program file is sent to the program file writing processing apparatus 110. Then, a programming tool type determining unit 111 determines a programming tool type of the program file based on a format of the obtained program file. For example, if the file in Fig. 7 is a program written using a CFC programmer, the programming tool type of the program file is a CFC programmer. Then, a selection unit 113 selects a program description abstraction unit 115-2 matching the CFC programmer from at least one program description abstraction unit 115. Here, the program description abstraction unit 115 is an interface of an OPC-UA client 119. Then, the program description abstraction unit 115-2 is used to abstract a program node description model from the program file. After the program node description model is abstracted, the OPC-UA client 119 on the program file writing processing apparatus 110 sends the abstracted program node description model via the HTTP/GET protocol to the cloud processing apparatus 120 for storage and for subsequent downloading and use by the program running processing apparatus 130.

In a program running phase, if the program runner 30 (for example, DCRT Runtime 30-1, Forte Runtime 30-2) needs to run the program file, the program runner 30 sends a program file obtaining request to the program file running processing apparatus 130. After receiving the program file obtaining request, the program file running processing apparatus 130 sends a program file description model obtaining request via the OPC-UA client 119 to at least one cloud processing apparatus. In the OPC-UA environment, since OPC-UA address space is shared, and a plurality of cloud processing apparatuses (i.e., a plurality of cloud servers) maintain the same address space, the program file running processing apparatus 130 may send a program file description model obtaining request to any of the cloud processing apparatuses. After receiving the program file description model obtaining request, the at least one cloud processing apparatus 120 returns at least one program node description model to the program running processing apparatus 130. Then, a program file conversion unit 133-1/133-2 matching the program runner 30 that runs the program file is used to convert the obtained at least one program node description model to program files 50-1 and 50-2 executable by the program runner based on a reference relationship between nodes in the obtained at least one program node description model. Next, the converted executable program file 50-1/50-2 is loaded to the program runner 30, for example, is loaded to the processing kernel of the program runner 30, for execution by the program runner 30, to generate program running data.

In a program monitoring/debugging phase, the at least one monitoring/debugging apparatus 140 sends a data obtaining request via the OPC-UA client 119 to the at least one cloud processing apparatus 120. After receiving the data obtaining request, the at least one cloud processing apparatus 120 sends the stored real-time running data and historical running data to the at least one monitoring/debugging apparatus 140. After being received by a data receiver 70 in a processor kernel 60 of the at least one monitoring/debugging apparatus 140, the real-time running data and historical running data are converted to a corresponding view 90 by using a view model 80, for monitoring and/or debugging by a user.

The embodiments of the program file writing processing method and apparatus and the program file running processing method and apparatus according to the present disclosure are described above with reference to Figs. 1 to 7. The above program file writing processing apparatus 110, the program file processing apparatus 120, and the program file running processing apparatus 130 may be implemented by hardware, or may be implemented by software or a combination of software and hardware.

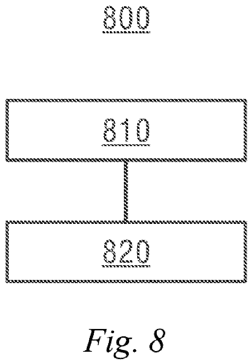

In the present disclosure, the program file writing processing apparatus 110 may be implemented by using a computing device. Fig. 8 is a block diagram of a computing device 800 for program file writing processing according to the present disclosure. According to one embodiment, the computing device 800 may comprise a processor 810, and the processor 810 executes at least one computer-readable instruction (i.e., the above element implemented in the form of software) stored or encoded in a computer-readable storage medium (i.e., a memory 820).

In one embodiment, the memory 820 stores computer executable instructions that, when executed, cause the at least one processor 810 to perform the following: determining a programming tool type of a program file based on a format of the program file; selecting a program description abstraction manner matching the determined programming tool type from at least one program description abstraction manner, each of the at least one program description abstraction manner corresponding to one program file format and being capable of abstracting a program node description model from a program file of a corresponding format; and using the selected program description abstraction manner to abstract the program node description model from the program file, wherein the program node description model is used to describe a reference relationship between nodes in the program file.

It should be understood that the computer executable instructions stored in the memory 820, when executed, cause the at least one processor 810 to perform various operations and functions described above with reference to Figs . 1 to 3 in the embodiments of the present disclosure.

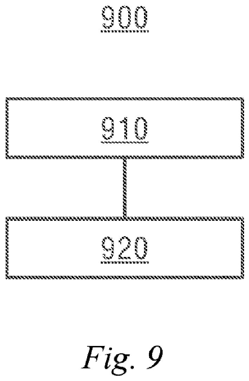

In the present disclosure, the program file running processing apparatus 130 may be implemented by using a computing device. Fig. 9 is a block diagram of a computing device 800 for program file running processing according to the present disclosure. According to one embodiment, the computing device 900 may comprise a processor 910, and the processor 910 executes at least one computer-readable instruction (i.e., the above element implemented in the form of software) stored or encoded in a computer-readable storage medium (i.e., a memory 920).

In one embodiment, the memory 920 stores computer executable instructions that, when executed, cause the at least one processor 910 to perform the following: obtaining at least one program node description model from at least one cloud processing apparatus, the program node description model being used to describe a reference relationship between nodes in a program file; and converting, by using a program file conversion unit matching a program runner that runs the program file, the obtained at least one program node description model to a program file executable by the program runner based on the reference relationship between the nodes in the obtained at least one program node description model.

It should be understood that the computer executable instructions stored in the memory 920, when executed, cause the at least one processor 910 to perform various operations and functions described above with reference to Fig. 1, and Figs. 4 to 7 in the embodiments of the present disclosure.

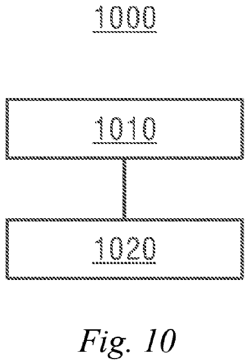

In the present disclosure, the cloud processing apparatus 120 may be implemented by using a computing device. Fig. 10 is a block diagram showing a computing device 1000 for cloud processing according to the present disclosure. According to one embodiment, the computing device 1000 may comprise a processor 1010, and the processor 1010 executes at least one computer-readable instruction (i.e., the above element implemented in the form of software) stored or encoded in a computer-readable storage medium (i.e., a memory 1020) .

In one embodiment, the memory 1020 stores computer executable instructions that, when executed, cause the at least one processor 1010 to perform the following: storing a program node information description model sent by the at least one program file writing processing apparatus, and/or distributing the stored program node information description model to the at least one program file running processing apparatus in response to a request of the at least one program file running processing apparatus.

According to one embodiment, a non-transitory machine-readable medium is provided. The non-transitory machine-readable medium may comprise machine executable instructions (i.e., the above elements implemented in the form of software) that, when executed by a machine, cause the machine to perform various operations and functions described above with reference to Figs. 1 to 7 in the embodiments of the present disclosure.

According to one embodiment, a computer program is provided, which comprises computer executable instructions that, when executed, cause at least one processor to perform various operations and functions described above with reference to Figs. 1 to 7 in the embodiments of the present disclosure.

According to one embodiment, a computer program product is provided, which comprises computer executable instructions that, when executed, cause at least one processor to perform various operations and functions described above with reference to Figs. 1 to 7 in the embodiments of the present disclosure.

Exemplary embodiments are described above in combination with the specific embodiments described in the drawings, but do not represent all the embodiments that can be implemented or fall within the protection scope of the claims. The term "exemplary" used throughout the description means "used as an example, an instance or an illustration", but does not mean "preferred" or "advantageous" over the other embodiments. For the purpose of providing an understanding of the described technologies, the specific embodiments comprise specific details. However, the technologies can be implemented without the specific details. In some embodiments, in order to avoid obscuring the described concepts in the embodiments, commonly known structures and apparatuses are shown in the form of a block diagram.

The descriptions above of the present disclosure are provided to enable any person of ordinary skill in the art to implement or use the present disclosure. For a person of ordinary skill in the art, various modifications made to the present disclosure are obvious and the general principles defined herein may also be applied to other variants without departing from the protection scope of the present disclosure. Therefore, the present disclosure is not limited to the examples and designs described herein, and corresponds to the widest scope in accordance with the principles and novel features disclosed herein.

## Claims

1. A method (S300) for program file writing processing, comprising:
determining (S320) a programming tool type of a program file based on a format of the program file;
selecting (S330) a program description abstraction manner matching the determined programming tool type from at least one program description abstraction manner, each of the at least one program description abstraction manner corresponding to one program file format and being capable of abstracting a program node description model from a program file of a corresponding format; and
using (S340) the selected program description abstraction manner to abstract the program node description model from the program file,
wherein the program node description model is used to describe a reference relationship between nodes in the program file.

2. The method (S300) as claimed in claim 1, wherein, when the method is performed on a client, the method further comprises:
sending (S350) the program node description model to a cloud processing apparatus for distribution by the cloud processing apparatus to at least one program runner.

3. A method (S500) for program file running processing, comprising:
obtaining (S530) at least one program node description model from at least one cloud processing apparatus, the program node description model being used to describe a reference relationship between nodes in a program file; and
converting (S540), by using a program file conversion unit matching a program runner that runs the program file, the obtained at least one program node description model to a program file executable by the program runner based on the reference relationship between the nodes in the obtained at least one program node description model.

4. The method as claimed in claim 3, further comprising:
loading (S550) the converted program file into a processing kernel of the program runner.

5. The method as claimed in any one of claims 1 to 4, wherein the program node description model is described using a description language applicable to a capability of describing the reference relationship between the nodes in the program file.

6. The method as claimed in claim 5, wherein the description language comprises one of the following description languages:
a description language in an OPC-UA address space format;
a description language in a JSON format; and
a description language in an XML format.

7. The method as claimed in any one of claims 1 to 4, wherein the program file is a program file of an automatic control system, and the program runner is a programmable logic controller.

8. A program file writing processing apparatus (110), comprising:
a programming tool type determining unit (111), configured to determine a programming tool type of a program file based on a format of the program file;
at least one program description abstraction unit (115), each program description abstraction unit corresponding to one program file format, configured to abstract a program node description model from a program file of a corresponding format, wherein the program node description model is used to describe a reference relationship between nodes in the program file; and
a selection unit (113), configured to select a program description abstraction unit matching the determined programming tool type from the at least one program description abstraction unit,
wherein the selected program description abstraction unit (115) is used to abstract the program node description model from the program file.

9. The program file writing processing apparatus (110) as claimed in claim 8, wherein, when the program file writing processing apparatus is located on a client, the apparatus further comprises:
a sending unit (117), configured to send the program node description model to a cloud processing apparatus for distribution by the cloud processing apparatus to at least one program runner.

10. The program file writing processing apparatus (110) as claimed in claim 8 or 9, wherein the program description abstraction unit (115) is an open-type cross-language interface.

11. A program file running processing apparatus (130), comprising:
a description model obtaining unit (131), configured to obtain at least one program node description model from at least one cloud processing apparatus, the program node description model being used to describe a reference relationship between nodes in a program file; and
at least one program file conversion unit (133), matching a program runner (30) that runs a program file, configured to convert the obtained at least one program node description model to a program file executable by the program runner (30) based on the reference relationship between the nodes in the obtained at least one program node description model.

12. The program file running processing apparatus (130) as claimed in claim 11, further comprising:
a loading unit (135), configured to load the converted program file into the program runner (30).

13. The program file running processing apparatus (130) as claimed in claim 11 or 12, wherein the program file conversion unit (133) is an open-type cross-language interface based on C++.

14. A system (10) for program file processing, comprising:
at least one program file writing processing apparatus (110) as claimed in any one of claims 8 to 10;
at least one program file running processing apparatus (130) as claimed in any one of claims 11 to 13; and
at least one cloud processing apparatus (120), configured to store a program node information description model sent by the at least one program file writing processing apparatus (110), and/or
distribute the stored program node information description model to the at least one program file running processing apparatus (130) in response to a request of the at least one program file running processing apparatus (130).

15. The system (10) as claimed in claim 14, wherein the at least one cloud processing apparatus (120) is further configured to:
store real-time running data and historical running data obtained after the at least one program runner (30) executes the loaded program file.

16. The system (10) as claimed in claim 15, further comprising:
at least one program file monitoring/debugging apparatus (140),
configured to receive the real-time running data and historical running data from the at least one cloud processing apparatus (120),
and perform monitoring and/or debugging based on the received real-time running data and historical running data.

17. The system (10) as claimed in any one of claims 14 to 16, wherein the program file writing processing apparatus (110), the program file running processing apparatus (130), and the program file monitoring/debugging apparatus (140) are located in at least one local terminal device.

18. The system (10) as claimed in claim 17, wherein the program file writing processing apparatus (110), the program file running processing apparatus (130), and the program file monitoring/debugging apparatus (140) are located on a first client, a second client, and a third client, respectively, and the first client, the second client, and the third client are clients based on a webpage.

19. A computing device (700, 800), comprising:
at least one processor (710, 810); and
a memory (720, 820) coupled to the at least one processor (710, 810), configured to store instructions that, when executed by the at least one processor (710, 810), cause the processor (710, 810) to perform the method as claimed in any one of claims 1 to 7.

20. A non-transitory machine-readable storage medium, storing executable instructions that, when executed, cause the machine to perform the method as claimed in any one of claims 1 to 7.

21. A computer program, comprising computer executable instructions that, when executed, cause at least one processor to perform the method as claimed in any one of claims 1 to 7.

22. A computer program product, tangibly stored on a computer-readable medium and comprising computer executable instructions that, when executed, cause at least one processor to perform the method as claimed in any one of claims 1 to 7.
